# EUROPÄISCHE PATENTANMELDUNG

(11) **EP 0 875 332 A2**
(43) Veröffentlichungstag der Anmeldung: **04.11.1998**
(21) Anmeldenummer: 98110376.5
(22) Anmeldetag: 02.11.1994
(51) Int. Cl.: B23P 15/40, B26F 1/44, B31D 1/02

(54) **Verfahren zum Bearbeiten von aus einer Trägerunterlage fotochemisch herausgeätzten Stanzteilen und eine durch das Verfahren hergestellte Stanzwalze**

(30) Priorität: 04.01.1994 DE 4400106
(62) Teilanmeldung aus: 94117292.6
(71) Anmelder: GERHARDT INTERNATIONAL A/S, DK-2770 Kastrup (DK)
(72) Erfinder: Gerhardt, Jorgen, 2791 Dragor (DK)
(74) Vertreter: Joergensen, Bjoern Barker

(57) **Zusammenfassung**

Die Erfindung betrifft ein Verfahren zum Bearbeiten von aus einer Trägerunterlage (2) fotochemisch herausgeätzten Stanzstegen (4), mittels denen Etiketten aus auf einem Unterlagsband lösbar haftendem Etikettenmaterial durch Wälzen der Stanzstege (4) über das Etikettenmaterial zu stanzen sind, wobei den Stanzstegen (4) durch Fräsen mittels eines kegelstumpfförmigen, die Längsseiten der Stanzstege (4) angreifenden, um seine Achse rotierenden Fräsers ein dreieckförmiger Querschnitt mit hohlkehlenförmigen Seiten gegeben wird, und die Trägerunterlage (2) eine Walze (2) oder ein währen des Fräsens auf einer Walze hülsenförmig befestigte Blech ist.

## Beschreibung

Die Erfindung betrifft ein Verfahren zum Bearbeiten von aus einer Trägerunterlage fotochemisch herausgeätzten Stanzstegen, mittels denen Etiketten aus auf einem Unterlagsband lösbar haftendem Etikettenmaterial durch Wälzen der Stanzstege über das Etikettenmaterial zu stanzen sind.

Die Trägerunterlage kann der Körper einer Walze sein, aber auch ein hülsenförmig auf einer Walze befestigtes Blech.

Es hat sich erweisen, daß nur fotochemisch herausgeätzten Stanzstege, da sie notwendigerweise verhältnismäßig breite obere Begrenzungsflächen haben, nicht ohne weiters zum Herausstanzen von Etiketten geeignet sind.

Ein Verfahren der in der Einleitung erwähnten Art ist aus der EP-A-0 321 590 bekannt, die ein Verfahren zum Herstellen eines Stanzwerkzeugs mit scharfen Schneidkanten für Etikettenschneidgeräte betrifft. Um zu erreichen daß die Schneidkanten eine konstante Höhe aufweisen, wird ein Stanzkörper dort in einem ersten Verfahrensschritt durch Ätzen mit einem Grat versehen, der dann in einem zweiten Verfahrensschritt durch Hämmern und/oder spanabhebendes Schaben in eine scharfe Schneidkante umgewandelt wird, wobei der Stanzkörper auf einer horizontalen Arbeitsplatte aufgelegt ist.

Aufgabe der Erfindung ist es, ein Verfahren eingangs genannter Art anzugeben, das zu Stanzstegen hoher Lebensdauer mit präzisen Stanzeigenschaften führt.

Zur Lösung dieser Aufgabe ist das Verfahren dadurch gekennzeichnet, daß den Stanzstegen durch Fräsen mittels eines kegelstumpfförmigen, die Längsseiten der Stanzstege angreifenden, um seine Achse rotierenden Fräsers ein dreieckförmiger Querschnitt mit hohlkehlenförmigen Seiten gegeben wird.

Um eine weitere Präzisierung der Stanzstege zu erhalten, ist das Verfahren bevorzugt dadurch gekennzeichnet, daß die gefrästen Stanzstege mit einem Werkzeug von Hand nachgearbeitet werden.

Wie schon angeführt, ist die Trägerunterlage einer Walze oder ein auf einer Walze hülsenförmig zu befestigendes Blech.

Um die Stanzstege beim Stanzen in einem vorgegebenen Abstand von einer Stanzunterlage zu halten, so daß die Stanzstege möglichst nur das Etikettenmaterial durchstanzen, nicht aber deren Unterlagsband, ist das Verfahren bevorzugt dadurch gekennzeichnet, daß die Walze einen Mittelabschnitt aufweist, auf dem sich die Stanzstege befinden, und beidseitig in Abstand von dem Mittelabschnitt Abstützabschnitte aufweist, deren Radius um etwa die Dicke des Unterlagsbands - vorzugsweise um 0,08 bis 0,25 mm - größer als der Radius des Mittelabschnitts einschließlich der Stanzstege ist.

Die Lebensdauer der Walze bzw. des Blechs und deren Stanzpräzision wird dadurch erhöht, daß die Walze aus einer Stahl-Rohlingswalze gedreht wird, die vor dem Drehen wenigstens oberflächlig auf etwa 35 bis 45 HRC gehärtet wurde, oder daß die Walze aus einer Stahl-Rohlingswalze gedreht wird, die nach dem Drehen wenigstens oberflächlich auf etwa 35 bis 65 HRC gehärtet wird, oder daß das Blech aus einem Stahl besteht, der wenigstens oberflächlich auf 45 bis 55 HRC gehärtet ist.

Folgende Bemessungsangaben haben sich als besonders vorteilhaft erwiesen:

Die Breite der Füße der Stanzstege beträgt bevorzugt 0,5 bis 1,0 mm.

Die Höhe der Stanzstege ist bevorzugt etwas größer als die Dicke des Etikettenmaterials und beträgt bevorzugt 0,4 bis 1,0 mm.

Die Breite der oberen Begrenzungsflächen der fotochemisch herausgeätzten - also noch nicht durch Fräsen bearbeiteten - Stanzstege beträgt 0,1 bis 0,8 mm.

Eine besonders hohe Lebensdauer der Stanzstege erhält man, wenn das Verfahren dadurch gekennzeichnet ist, daß die Höhe der in Wälzrichtung (Richtung L) verlaufenden Stanzstege - allenfalls bis auf Endabscnitte dieser Stanzstege - vorzugsweise um 0,007 bis 0,011 mm - niedriger ist, als die Höhe der quer zur Wälzrichtung (Richtung Q) verlaufenden Stanzstege - wiederum allenfalls bis auf Endabschnitte dieser Stanzstege.

Im folgenden wird die Erfindung an Ausführungsbeispielen unter Hinweis auf die beigefügten Zeichnungen beschrieben.

Fig. 1 zeigt eine erste Ausführungsform einer Stanzwalze im Fertigzustand.

Fig. 2 zeigt einen Schnitt längs II-II in fig. 1.

Fig. 3 zeigt eine zweite Ausführungsform einer Walze beim Umlegen und hülsenförmigen Biegen eines mit den Stanzstegen versehenen Blechs.

Fig. 4 zeigt einen Schnitt längs IV-IV in fig. 3.

Fig. 5 zeigt eine Seitenansicht einer fertigen Stanzwalze nach fig. 1 oder fig. 3.

Die fig. 6a bis 6d erläutern unterschiedliche Bearbeitungsschritte der Stanzstege.

Fig. 7 zeigt einen rechteckig geschlossenen Stanzsteg (grundsätzlich brauchen die Stanzstege nicht geschlossen zu sein).

Fig. 8 zeigt eine Fräsmaschine zum Fräsen von fotochemisch aus einem Zylinderkörper oder aus einem um einen Zylinderkörper gebogenen Blech herausgeätzten Stanzstegen.

Fig. 9 zeigt schematisch eine Handbearbeitung der Stanzstege.

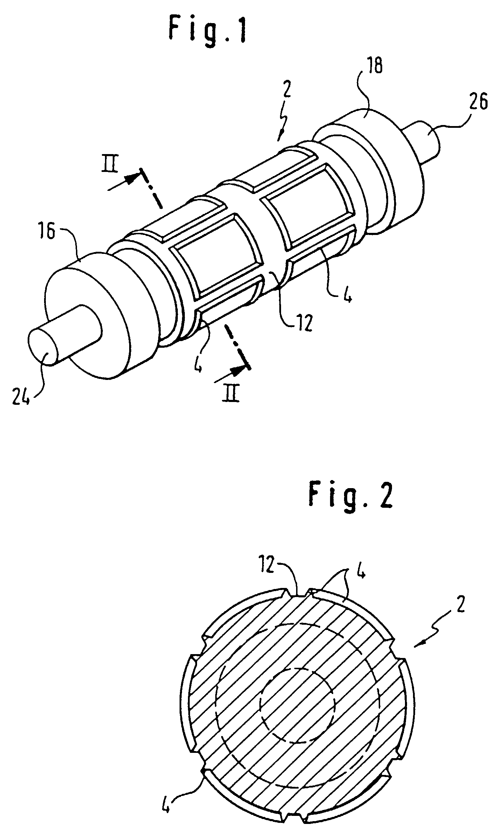

Die fig. 1 und 2 zeigen eine Walze 2, aus deren Körper Stanzstege 4 fotochemisch herausgeätzt und anschließend durch Fräsen bearbeitet sind.

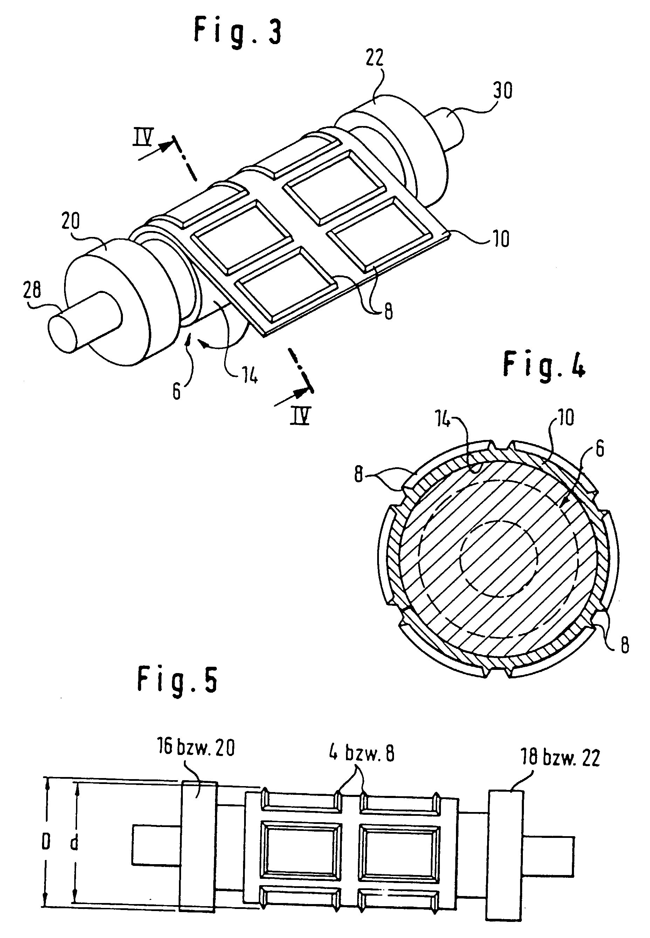

Die figuren 3 und 4 zeigen eine Walze 6, um das ein mit fotochemisch herausgeätzten und anschließend gefrästen Stanzstegen 8 versehenes Blech 10 hülsenförmig herumgebogen ist. In beiden Fällen befinden sich die Stanzstege 4, auf einem Mittelabschnitt 12 bzw. 14 der Walze 2 bzw. 6, beidseitig von dem in Abstand Abstützabscnitte 16, 18 bzw. 20, 22 vorgesehen sind, deren Radius um etwa die Dicke des Unterlagsbands der Etikettenmaterials - vorzugsweise 0,8 bis 0,25 mm - größer als der Radius des Mittelabschnitts 12 bzw. 14 einschließlich der Stanzstege 4 bzw. 8 ist. Der erstgenannte Radius ist in Fig. 5 mit D, der letztgenannte Radius in fig. 5 mit d bezeichnet. An die Abstützabschnitte 16, 18 bzw. 20, 22 schließen sich Lagerzapfen 24, 26 bzw. 28, 30 an. Die Walzen 2 bzw. 6 sind aus einer ursprünglich zylindrischen Stahl-Rohlingswalze, die wenigstens oberflächlich auf etwa 60 HRC gehärtet wurde, gedreht.

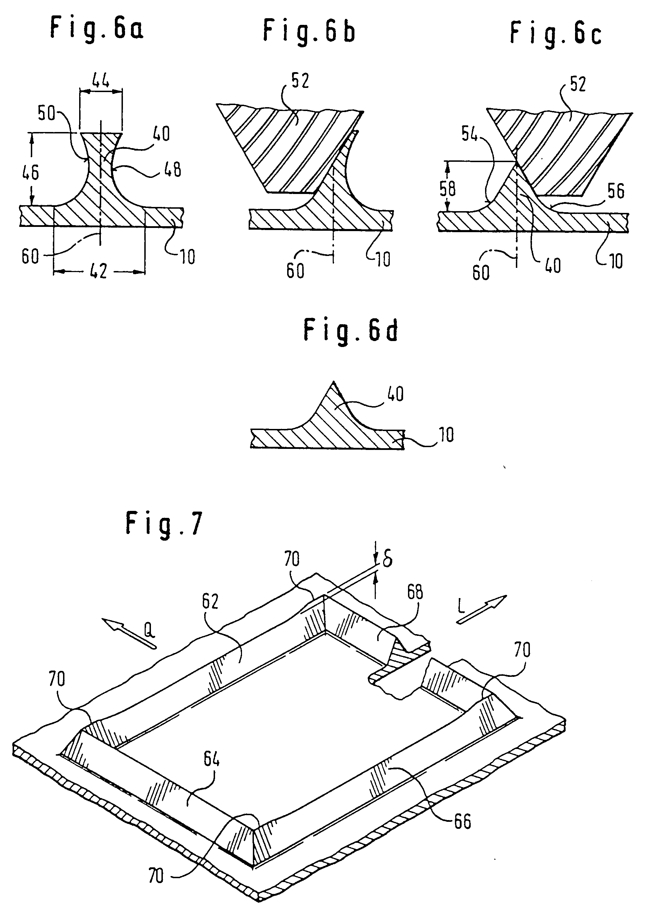

Fig. 6a zeigt einen Stanzsteg 40, wie er durch fotochemisches Ätzen entsteht. Die Breite seines Fußes 42 beträgt 0,5 bis 1,0 mm, die Breite seiner oberen Begrenzungsfläche 44 0,1 bis 0,8 mm, seine Höhe 46 (Ätztiefe) etwa 0,4 bis 1,0 mm. Seine Seitenflächen 48, 50 sind, wie dies beim Fotoätzen zwangsläufig ist, hohlkehlenförmig, da beim Fotoätzen die obere Begrenzungsfläche durch ein ätzfestes Material (Fotoresist) abgedeckt ist.

Mittels eines kegelstumpfförmigen, um seine Achse rotierenden Fräsers 52 werden nun die eine Seite und die andere Seite des fotochemisch herausgeätzten Stanzstegs gefräst.

Der Stanzsteg 40 erhält dadurch einen dreieckförmigen Querschnitt mit im Bereich seines Fußes 42 noch verbleibenden hohlkehlenförmigen Abschnitten 54, 56 der hohlkehlenförmigen Seitenflächen 48, 50. Die Höhe 58 des gefrästen Stanzstegs 40 hängt davon ab, wie weit der Fräser 52 in Richtung zur Mittellinie 60 der Stanzstege 40 bewegt wird. Diese Bewegung ist in die jeweils verwendete Werkzeugmaschine einzuprogrammieren. Fig. 6d zeigt einen fertig gefrästen Stanzsteg 40.

Fig. 7 zeigt zu einem Rechteck geschlossene Stanzstege 62, 64, 66, 68. Die in Wälzrichtung (Drehrichtung) der Walzen 2 bzw. 6 verlaufenden Stanzstege 62, 66 sind über den größten Teil ihrer Länge (bis auf ihre Endabschnitte 70) bevorzugt um 0,007 bis 0,011 mm niedriger als die Höhe der quer zur Wälzrichtung verlaufenden Stanzstege 64, 68. Der Höhenunterschied ist mit δ gekennzeichnet. Solche Höhenunterschiede sind ebenfalls durch entsprechendes Programmieren der jeweils verwendeten Werkzeugmaschinen zu erreichen.

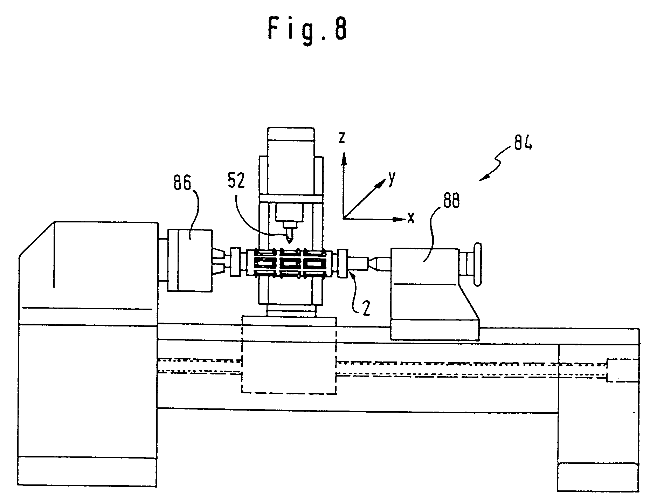

Fig. 8 zeigt in Seitenansicht eine Werkzeugmaschine 84, in die eine Walze 2, gegebenenfalls mit einem um sie gebogenen Blech, zwischen einer Arbeitsspindel 86 und einem Reitstock 88 eingespannt ist. Die Arbeitsspindel 86 wird beim Fräsen programmiert gedreht. Der Fräser 52 ist auf und ab, nach links und rechts, vor und zurück programmiert bewegbar (Koordinatenrichtung x, y und z).

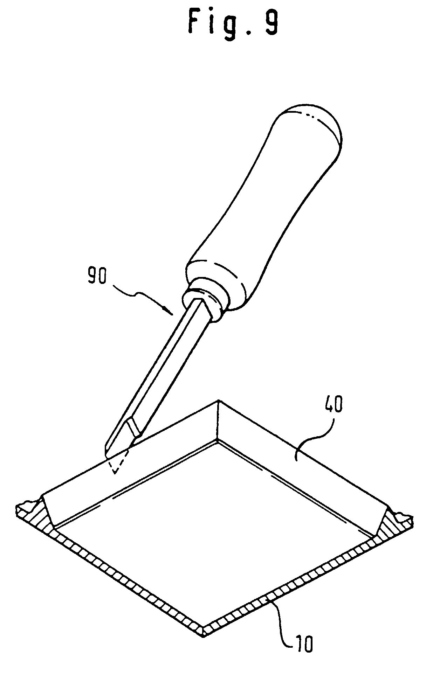

Fig. 9 zeigt einen Schaber 90, mit dem ein gefräster Stanzsteg von Hand nachbearbeitet wird.

## Patentansprüche

1. Verfahren zum Bearbeiten von aus einer Trägerunterlage (2; 10) fotochemisch herausgeätzten Stanzstegen (4; 8; 40; 62, 66, 68), mittels denen Etiketten aus auf einem Unterlagsband lösbar haftendem Etikettenmaterial durch Wälzen der Stanzstege (4; 8; 40; 62, 66, 68) über das Etikettenmaterial zu stanzen sind,
dadurch **gekennzeichnet**,
daß den Stanzstegen (4; 8; 40; 62, 66, 68) durch Fräsen mittels eines kegelstumpfförmigen, die Längsseiten der Stanzstege (4; 8; 40; 62, 66, 68) angreifenden, um seine Achse rotierenden Fräsers (52) ein dreieckförmiger Querschnitt mit hohlkehlenförmigen Seiten (54, 56) gegeben wird, und daß die Trägerunterlage (2; 10) eine Walze (2) oder ein während des Fräsens auf einer Walze (6) hülsenförmig befestigte Blech (10) ist.

2. Verfahren nach Anspruch 1,
dadurch **gekennzeichnet**, daß die gefrästen Stanzstege (4; 8; 40; 62, 66, 68) mit einem Werkzeug (90) von Hand nachgearbeitet werden.

3. Verfahren nach Anspruch 1 oder 2, dadurch **gekennzeichnet**, daß die Walze (2; 6) einen Mittelabschnitt (12; 14) aufweist, auf dem sich die Stanzstege (4; 8; 40; 62, 64, 66, 68) befinden und beidseitig in Abstand von dem Mittelabschnitt (12; 14) Abstützabschnitte (16, 18; 20, 22) aufweist, deren Radius (D) um etwa die Dicke des Unterlagsbands - vorzugsweise um 0,08 bis 0,25 mm - größer als der Radius (d) des Mittelabschnitts (12; 14) einschließlich der Stanzstege (4; 8; 40; 62, 64, 66, 68) ist.

4. Verfahren nach einem der vorstehenden Ansprüche, dadurch **gekennzeichnet**, daß die Walze (2; 6) aus einer Stahl-Rohlingswalze gedreht wird, die vor dem Drehen wenigstens oberflächlich auf etwa 35 bis 45 HRC gehärtet wurde.

5. Verfahren nach einem der vorstehenden Ansprüche, dadurch **gekennzeichnet**, daß die Walze (2; 6) aus einer Stahl-Rohlingswalze gedreht wird, die nach dem Drehen wenigstens oberflächlich auf etwa 35 bis 65 HRC gehärtet wird.

6. Verfahren nach einem der vorstehenden Ansprüche, dadurch **gekennzeichnet**, daß das Blech (10) aus einem Stahl besteht, der wenigstens oberflächlich auf 45 bis 55 HRC gehärtet ist.

7. Verfahren nach einem der vorstehenden Ansprüche, dadurch **gekennzeichnet**, daß die Breite (42) der Füße der Stanzstege (4; 8; 40; 62, 64, 66, 68) 0,5 bis 1,0 mm beträgt.

8. Verfahren nach einem der vorstehenden Ansprüche, dadurch **gekennzeichnet**, daß die Höhe (46) der Stanzstege (4; 8; 40; 62, 64, 66, 68) etwas größer als die Dicke des Etikettenmaterials ist, vorzugsweise 0,4 bis 1,0 mm beträgt.

9. Verfahren nach einem der vorstehenden Ansprüche, dadurch **gekennzeichnet**, daß die Breite (44) der oberen Begrenzungsflächen der fotochemisch herausgeätzten Stanzstege (4; 8; 40; 62, 64, 66, 68) 0,1 bis 0,8 mm beträgt.

10. Verfahren nach einem der vorstehenden Ansprüche, dadurch **gekennzeichnet**, daß die Höhe der in Wälzrichtung (Richtung L) verlaufenden Stanzstege (62, 66) - allenfalls bis auf Endabscnitte (70) dieser Stanzstege (62, 66) - vorzugsweise um 0,007 bis 0,011 mm - niedriger ist als die Höhe der quer zu Wälzrichtung (Richtung Q) verlaufenden Stanzstege (64, 68) - wiederum allenfalls bis auf Endabschnitte dieser Stanzstege (64, 68).

11. Stanzwalze (2) mit maschinell bearbeiteten Stanzstegen (4), mittels denen Etiketten aus auf einem Unterlagsband lösbar haftendem Etikettenmaterial durch Wälzen der Walze (2) mit den Stanzstegen (4) über das Etikettenmaterial zu stanzen sind,
dadurch **gekennzeichnet**,
daß die Stanzstege (4; 40) fotochemisch aus der Walze (2) herausgeätzt sind und daß den geätzten Stanzstegen (40) ein dreieckförmiger Querschnitt mit hohlkehlenförmigen Seiten (54, 56) durch Fräsen der Stege (40) mittels eines kegelstumpfförmigen, an die Längsseiten der Stanzstege (4; 40) angreifenden und sich um seine eigene Achse drehenden Fräsers (52) gegeben ist, wobei die Oberflächen der Längsseiten der Stanzstegen (4; 40) spuren des kegelstumpfförmigen Fräsers aufweisen und die Oberfläche der Walze (2) zwischen der Stanzstegen (4; 40) Ätzspur aufweist.
